Europäisches Patentamt

European Patent Office

Office européen des brevets

(11) Publication number: 0 317 255
A2

# EUROPEAN PATENT APPLICATION

(21) Application number: 88310758.3

(22) Date of filing: 15.11.88

(51) Int. Cl.4: G01M 3/02

(30) Priority: 20.11.87 JP 177165/87

(43) Date of publication of application:
24.05.89 Bulletin 89/21

(84) Designated Contracting States:
AT BE CH DE ES FR GB GR IT LI LU NL SE

(71) Applicant: JUNKOSHA CO. LTD.
25-25, Miyasaka 2-chome
Setagaya-ku Tokyo 156(JP)

(72) Inventor: Akiba, Jyuji
1-27-202, 494 Shimo-Kayama Hitaka-machi
Iruma-gun Saitama(JP)
Inventor: Kojima, Kazuyuki
1768 Sasai
Sayama-shi Saitama(JP)
Inventor: Sugibuchi, Hiroyuki
N-306 Kotesashi-Hights 3-16,
Kotesashi-machi
Tokorozawa-shi Saitama(JP)

(74) Representative: Taylor, Derek George et al
MATHISEN, MACARA & CO. The Coach
House 6-8 Swakeleys Road
Ickenham Uxbridge UB10 8BZ(GB)

(54) Leak detecting apparatus.

(57) Leak detecting appartus is provided wherein the detecting sensor (1) of an otherwise conventional detector is covered by a porous covering structure (3) which adsorbs gases. The preferred porous covering is porous, active carbon.

Fig.1.

To Meter

EP 0 317 255 A2

# LEAK DETECTING APPARATUS

The present invention relates to detecting apparatus for detecting leakage of liquids.

In conventional detecting apparatus used to detect the leakage of liquids, the detecting sensor of the apparatus is installed in the location where detection of a leak is to take place. The presence of the liquid that is to be detected is ascertained when the liquid that is to be detected contacts the sensor.

However, in conventional detecting apparatus, the detecting sensor is exposed to the environment. In cases where the detecting sensor is installed outdoors, molecules of gases and particles other than the liquid to be detected can reach the detecting sensor and have a deleterious effect on the characteristics of the detecting sensor causing false detection readings.

A requirement exists for a detecting apparatus in which the detecting sensor does not directly contact gases other than the target of detection.

According to the present invention there is provided leak detecting apparatus comprising a leak detecting sensor covered by a porous covering, said porous covering being capable of adsorbing gases.

An embodiment of the present invention will now be particularly described by way of example, with reference to the accompanying drawings in which:

Figure 1 is a front elevational view, partly in cross-section, of detecting apparatus according to the invention, taken substantially along line 1-1 of Figure 3;

Figure 2 is a front elevation of the detecting apparatus of Figure 1, and

Figure 3 is a top plan view of the apparatus of Figure 1.

Leak detecting apparatus is provided wherein the detecting sensor of an otherwise conventional detector is covered by a porous covering structure which adsorbs gases. The preferred porous covering is porous, active carbon.

Since the detecting sensor is covered by a porous structure which has gas-adsorbing properties, molecules of gases, which are not the target of detection, are adsorbed on the surfaces inside the pores of this porous structure. Accordingly, the accumulation of molecules or particles of gases other than the target of detection on the surface of the detecting sensor apparatus is prevented. Erroneous detection is thus substantially prevented and improved detection characteristics are provided.

The embodiment of the invention illustrated in the drawings is an oil leakage detecting apparatus in, for example, an oil-fired electrical power generating station.

The sensor 1 of the oil leakage detecting apparatus, when the liquid that is the target of detection contacts it, detects the leakage of said liquid. This detecting sensor 1 is housed in a frame 2 which may be of plastic or metal.

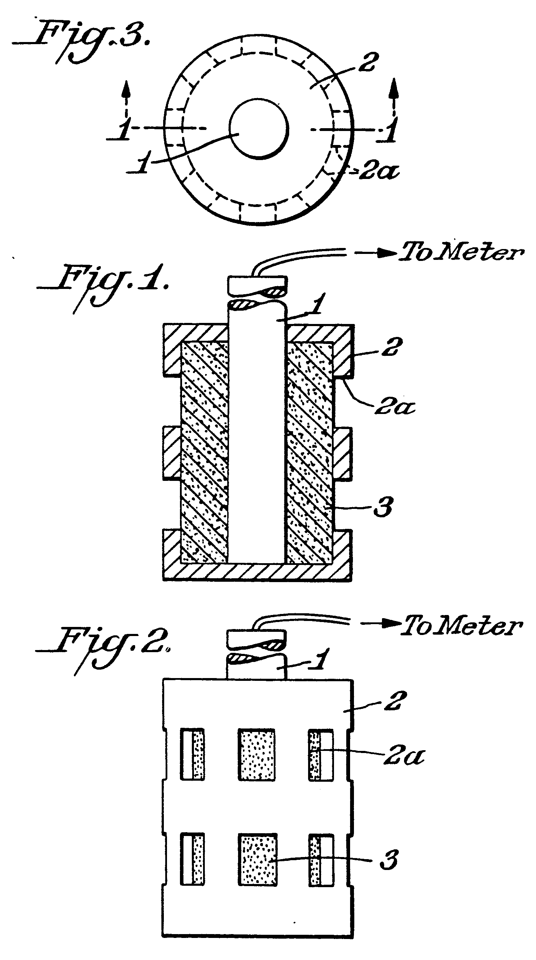

As shown in Figure 2, a plurality of openings 2a are formed in the frame 2, so that the liquid constituting the target of detection can enter via these openings. The openings 2a are of such a size, and are installed at such intervals that a sufficient amount of liquid enters into the interior of the frame 2 upon a leak occuring.

A porous structure 3 is installed inside the frame 2. In this example, active carbon in the form of compressed powder or bound powder is used for this porous structure 3. This porous structure 3 is installed so that it adheres tightly to the detecting sensor 1, thus ensuring that the detecting sensor 1 is not directly exposed to the outside air.

If the detecting apparatus is installed at the base of an outdoor storage tank, for example, the leakage of oil from the tank will result in oil entering into the interior of the frame 2 through the openings 2a of the detecting apparatus. Accordingly, this oil will reach the detecting sensor 1 through the interior of the pores of the porous structure 3.

In this case, since a plurality of openings 2a of appropriate size are installed at appropriate intervals in the frame 2, a sufficient amount of leaking oil will enter into the interior of the frame 2 through the openings 2a.

Many oil-fired electrical power generating stations are located in coastal areas. Because of this, the ambient air is often contaminated by smoke and ship exhaust. Accordingly, the atmospheric air which enters through the openings 2a may contain various components. However, when molecules of harmful gases pass through the interior of the pores of the porous structure 3, these molecules adhere to the interior walls of the pores of the porous structure 3, so that only the liquid that constitutes the target of detection reaches the detecting sensor 1.

As a result, the adsorption of gases on the detecting sensor 1 is prevented. Accordingly, improved detection characteristics are provided in the detecting apparatus.

In the above example, active carbon was used for the porous structure 3 and that material is preferred. However, other substances may be used for different targets of detection. Of course, a substance which will not adsorb the substance that constitutes the target of detection is selected for use as the aforementioned porous structure 3.

The detecting apparatus in the above example of application was an oil leakage detecting apparatus for an oil-fired electrical power generating station. However, the present invention can also be applied to detecting apparatus for other substances such as leaking water, for example.

## Claims

1. Leak detecting apparatus comprising a leak detecting sensor covered by a porous covering, said porous covering being capable of adsorbing gases.

2. Apparatus according to claim 1 wherein said porous covering is porous, active carbon.

*Fig.3.*

2

2a

1

*Fig.1.*

→ *To Meter*

1

2

2a

3

*Fig.2.*

→ *To Meter*

1

2

2a

3